(19) Europäisches Patentamt / European Patent Office / Office européen des brevets

(11) **EP 2 970 634 B1**

(12) **EUROPEAN PATENT SPECIFICATION**

(45) Date of publication and mention
of the grant of the patent:
**04.01.2017 Bulletin 2017/01**

(51) Int Cl.:
**C08K 5/00** $^{(2006.01)}$     **H01B 3/44** $^{(2006.01)}$

(21) Application number: **14721024.9**

(22) Date of filing: **05.03.2014**

(86) International application number:
**PCT/US2014/020556**

(87) International publication number:
**WO 2014/149723 (25.09.2014 Gazette 2014/39)**

(54) **EPOXIDIZED-FATTY-ACID-ALKYL-ESTER PLASTICIZERS FROM NATURAL-OIL SOAP STOCK AND METHODS FOR MAKING SUCH EPOXIDIZED-FATTY-ACID-ALKYL-ESTER PLASTICIZERS**

EPOXIDIERTE FETTSÄURE-ALKYLESTER-WEICHMACHER AUS EINEM ERDÖL-SEIFENVORRAT UND VERFAHREN ZUR HERSTELLUNG SOLCHER EPOXIDIERTER FETTSÄURE-ALKYLESTER-WEICHMACHER

PLASTIFIANTS D'ESTER D'ALKYLE D'ACIDE GRAS ÉPOXYDÉ PROVENANT DE STOCK DE SAVON D'HUILE NATURELLE ET PROCÉDÉS DE FABRICATION DE CES PLASTIFIANTS D'ESTER D'ALKYLE D'ACIDE GRAS ÉPOXYDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2013 US 201361787795 P**

(43) Date of publication of application:
**20.01.2016 Bulletin 2016/03**

(73) Proprietor: **Dow Global Technologies LLC**
**Midland, MI 48674 (US)**

(72) Inventors:
• **GHOSH-DASTIDAR, Abhijit**
**East Brunswick, NJ 08816 (US)**
• **MUNDRA, Manish**
**Collegeville, PA 1942619090 (US)**
• **MAURER, Brian R.**
**North Wales, PA 19454 (US)**
• **ZHANG, Xiaodong**
**Belle Mead, NJ 08502 (US)**

(74) Representative: **Boult Wade Tennant**
**Verulam Gardens**
**70 Gray's Inn Road**
**London WC1X 8BT (GB)**

(56) References cited:
**US-A1- 2011 272 174     US-A1- 2012 181 056**

• **S D TOLIWAL ET AL: "Utilization of by-products of oil processing industries for PVC stabilizers", JOURNAL OF SCIENTIFIC & INDUSTRIAL RESEARCH, vol. 68, March 2009 (2009-03), pages 229-234, XP055122265,**

## Description

REFERENCE TO RELATED APPLICATIONS

The present application claims the benefit of U.S. Provisional Application No. 61/787,795, filed on March 15, 2013.

FIELD

Various embodiments of the present invention relate to epoxidized-fatty-acid-alkyl-ester plasticizers produced, at least in part, from a natural-oil soap stock. Other aspects of the invention concern methods for making such plasticizers and plasticized polymeric resins containing such plasticizers.

INTRODUCTION

Plasticizers are compounds or mixtures of compounds that, when added to polymer resins, can lower one or more of the modulus and tensile strength, and increase one or more of flexibility, elongation, impact strength, and tear strength of the resin (typically a thermoplastic polymer) to which they are added. A plasticizer may also lower the melting point of the polymer resin, which lowers the glass transition temperature and enhances processability of the polymer resin.

Phthalic-acid diesters (also known as "phthalates") are commonly used as plasticizers in many flexible polymer products, such as polymer products formed from polyvinyl chloride ("PVC") and other vinyl polymers. Examples of phthalate plasticizers include diisononyl phthalate, diallyl phthalate, di-2-ethylhexyl phthalate, dioctyl phthalate, and diisodecyl phthalate. Other plasticizers used for high temperature applications are trimellitates and adipic polyesters.

Phthalate plasticizers have recently come under intense scrutiny by public interest groups concerned about the negative environmental impact of phthalates and potential adverse health effects in humans exposed to phthalates. Accordingly, plasticizers that minimize or eliminate the use of phthalates are needed. Although advancements have been made, improvements in such plasticizers are still desired.

SUMMARY

One embodiment is a plasticizer composition, comprising:

> epoxidized fatty acid alkyl ester ("eFAAE"); and
> an epoxidized natural oil,

wherein at least a portion of said eFAAE is derived from a natural-oil soap stock.

DETAILED DESCRIPTION

Various embodiments of the present invention concern plasticizers comprising an epoxidized fatty acid alkyl ester ("eFAAE") that is at least partially derived from a natural-oil soap stock. Such plasticizers further include an epoxidized natural oil ("eNO"). Such plasticizers can be incorporated with a polymeric resin to form plasticized polymeric compositions, which can in turn be employed in various articles of manufacture.

*Plasticizer*

The present disclosure provides a plasticizer comprising an eFAAE that is at least partially derived from a natural-oil soap stock. In an embodiment, the plasticizer is phthalate-free, or is otherwise devoid or substantially devoid of phthalates. Additionally, such plasticizers can be devoid or substantially devoid of trimellitates.

As used herein, the term "natural oil" denotes a composition comprising triglycerides (i.e., a tri-ester of three fatty acids and glycerol) that is derived from a natural source, such as a plant, a vegetable, a seed, an animal (e.g., beef or poultry) fat, a microbe (e.g., algae or bacteria), or combinations thereof. In an embodiment, natural oils include genetically-modified natural oils. The term "natural oil" excludes petroleum-derived oil. Non-limiting examples of suitable natural oils include beef-tallow oil, canola oil, castor oil, corn oil, fish oil, linseed oil, palm oil, rapeseed oil, safflower oil, soybean oil, sunflower oil, tall oil, tung oil, and any combination of two or more thereof. In an embodiment, the natural oil comprises soybean oil. In an embodiment, the natural oil is soybean oil.

As known in the art, such natural oils are generally prepared by a refining process, starting with a crude natural oil. Crude natural oils typically contain a mixture of glycerides (i.e., primarily triglycerides and possibly some diglycerides and/or monoglycerides), free fatty acids, and phospholipids. As used herein, the term "free" fatty acids is intended to denote fatty acids that are not bound to a glycerol as part of a glyceride. In a typical refining process, the crude natural oil may first undergo a process called "degumming" to remove phospholipids. This process can be achieved via a series of solvent extractions and precipitation steps. Thereafter, free fatty acids can be separated from the triglyceride component of the crude oil. The resulting free-fatty-acid-rich byproduct is known in the art as "soap stock."

The separation of free fatty acids from triglycerides in crude natural oil is typically accomplished by one of two ways. The most common process employed is often referred to as "caustic" refining, which involves adding a base (typically sodium hydroxide, optionally with sodium carbonate) to the crude natural oil to form salts with the free fatty acids, rendering the free fatty acids water soluble. Water is generated as a byproduct of this condensation reaction. An aqueous solution containing the free fatty acids (i.e., the soap stock) can then be removed from the triglyceride component via centrifugation. The soap stock can then be converted back to fatty acids by treating the solution with, for example, a mineral acid. This procedure results in an "acidified" or "acidulated" soap stock, as known in the art. The second, less common option for separating free fatty acids from the triglyceride component is known as "physical refining," in which fatty acids are removed via steam distillation under high vacuum.

Regardless of which method is employed, the resulting natural-oil soap stock (acidified, if produced via caustic refining) can have a free fatty acid content ranging from 10 to 99 weight percent ("wt%"), from 12 to 97 wt%, or from 24 to 95 wt% based on the entire natural-oil soap stock weight, when water has been removed from the natural-oil soap stock. The types of free fatty acids in the natural-oil soap stock can vary significantly, but generally range from $C_{14}$ fatty acids (e.g., myristic acid, a.k.a., tetradecanoic acid) to $C_{24}$ fatty acids (e.g., lignoceric acid, a.k.a., tetracosanoic acid). Additionally, the free fatty acids of the natural-oil soap stock can be saturated, mono-unsaturated, and/or poly-unsaturated (e.g., di-unsaturated and tri-unsaturated). In various embodiments, the free fatty acids of the natural-oil soap stock can be composed primarily (i.e., at least 50 wt%) of $C_{18}$ fatty acids (e.g., stearic acid (C18:0), oleic acid (C18:1), linoleic acid (C18:2), and linolenic acid (C18:3)). In an embodiment, $C_{18}$ fatty acids constitute in the range of from 50 to 90 wt%, or in the range of from 60 to 80 wt%, of the total free fatty acid content of the natural-oil soap stock. In addition, the natural-oil soap stock can comprise triglycerides in an amount ranging from 0.5 to 60 wt%, from 1 to 40 wt%, or from 2 to 30 wt% based on the entire natural-oil soap stock weight. The profile (i.e., type and concentration) of the fatty-acid moieties of the triglycerides can be the same as or similar to the profile of the free fatty acids, described above. In addition, the natural-oil soap stock can comprise diglycerides in an amount ranging from 0.5 to 60 wt%, from 1 to 40 wt%, or from 2 to 35 wt% based on the entire natural-oil soap stock weight. The profile (i.e., type and concentration) of the fatty-acid moieties of the diglycerides can be the same as or similar to the profile of the free fatty acids, described above. The free fatty acid, triglyceride, and diglyceride components combined can typically constitute in the range of from 90 to 99, or from 94 to 96, wt% of the total natural-oil soap stock. The natural-oil soap stock can further comprise water in an amount less than 5 wt%, less than 3 wt%, less than 1 wt%, or less than 0.1 wt% based on the entire natural-oil soap stock weight. Furthermore, the natural-oil soap stock can have an acid number ranging from 80 to 130 mg KOH / g. Acid number is determined according to ASTM D-974. Moreover, the natural-oil soap stock can have an iodine number of at least 60 g $I_2$ / 100 g of natural-oil soap stock, at least 100 g $I_2$ / 100 g of natural-oil soap stock, or in the range of from 120 to 210 g $I_2$ / 100 g of natural-oil soap stock. Iodine number is determined according to American Oil Chemists' Society ("AOCS") standard method AOCS Tg 1-64.

Natural-oil soap stock differs from conventional natural oils (i.e., commercially available refined natural oils) in that conventional natural oils tend to be comprised exclusively or nearly exclusively of triglycerides, whereas natural-oil soap stocks generally comprise both free fatty acids and glycerides (i.e., triglycerides, diglycerides, and possibly monoglycerides). In addition to glycerides and free fatty acids, natural-oil soap stock can contain significant amounts of impurities in the form of water, as well as phospholipids, pigments, and other minor non-polar components. The water content can be as high as 5 wt%. Water can be emulsified with the lipid component of the natural-oil soap stock, and can be difficult to remove. Furthermore, water poses a significant problem to esterification of the natural-oil soap stock (discussed below) because water can inhibit both the transesterification of glycerides and the esterification of free fatty acids with alcohol due to reaction equilibrium effects. Additionally, the presence of emulsified water and free fatty acid during subsequent epoxidation reactions (discussed below) can cause substantial degradation of the epoxy rings by opening them up and forming hydroxyl and carboxylic functionalities in their place. Not only does this reduce the oxirane oxygen content of the eFAAE, which is important for it to act as an effective plasticizer, but the hydroxyl groups increase incompatibility of the plasticizer and can cause exudation in a polymer resin (Len Krauskopf, "Plasticizer Structure/Performance Relationships," Journal of Vinyl Technology, September, 1993, Vol 15, No. 3). Consequently, one of ordinary skill in the art of using epoxidized fatty acid alkyl ester as a plasticizer would be discouraged from using natural-oil soap stock as a feedstock for making the same.

In addition, whereas conventional natural oil tends to have a yellow-to-brownish color, natural-oil soap stock is often blackish-brown in color, indicating a heavy level of pigmentation. The chemical constituents responsible for such high color could also have a deleterious effect on the epoxidation reaction of the fatty acid methyl ester ("FAAE") or on the plasticizing property of the epoxidized fatty acid alkyl ester. Moreover, plasticizers are often desired to be low in color so that they do not adversely affect the color of the plasticized polymeric articles in which they are used, particularly when such articles are intended to be clear or light-color formulations.

As noted above, the natural-oil soap stock (acidified, if produced via caustic refining) can contain a significant quantity of glycerides (i.e., triglycerides, diglycerides, and possibly monoglycerides). In an embodiment, prior to producing eFAAE therefrom, at least a portion, substantially all, or all of the glycerides in the natural-oil soap stock can be converted to free fatty acids and glycerol. This can be accomplished via conventional means, such as via hydrolysis under elevated pressure and temperature (e.g., at least 200 °C). Glycerol can be removed from the natural-oil soap stock following hydrolysis. In various embodiments, at least 50, at least 75, at least 90, at least 95, or at least 99 wt% of the glycerides in the natural-oil soap stock are converted to free fatty acids.

Once the natural-oil soap stock described above has been obtained, it can be esterified and epoxidized to form an eFAAE. In an embodiment, the fatty acids in the natural-oil soap stock can first be esterified to produce fatty acid alkyl esters ("FAAE"). Esterification of the natural-oil soap stock can be performed using any conventional or hereafter discovered esterification techniques. In an embodiment, the natural-oil soap stock is esterified via contact with an alcohol under esterification conditions with either an acid or base catalyst. The alcohol employed for esterification is selected based on the desired alkyl substituent of the fatty acid alkyl esters. In various embodiments, alcohols suitable for use in esterification include $C_1$ to $C_8$ monohydric linear alcohols, such as methanol, ethanol, propanol, and butanol, or $C_3$ to $C_8$ branched alcohols, such as isopropanol, isobutanol, and 2-ethylhexanol. In an embodiment, the alcohol is methanol, such that the resultant fatty acid alkyl esters are fatty acid methyl esters. Esterification conditions employed can include a reaction temperature in the range of from 20 to 120 °C, or from 40 to 60 °C; a reaction time ranging from 30 minutes to 12 hours; and ambient pressure conditions.

As noted above, a catalyst may be employed during esterification. Catalysts suitable for use in esterification include homogeneous alkali catalysts, including metal alkoxides such as sodium methoxide, potassium methoxide, and sodium ethoxide, or metal hydroxides such as potassium hydroxide, sodium hydroxide, or supported solid alkali catalysts. Other classes of catalysts that may also be employed include acids, acidic resins, double metal cyanide catalysts, enzymes, super acids, super bases, and metal salts. The catalyst can be in homogeneous or heterogeneous form. In an embodiment, the catalyst employed for esterification is sodium methoxide solution in methanol. Catalysts can generally be employed in a total concentration ranging from 0.1 to 5 wt%, from 0.5 to 3 wt%, or from 0.8 to 1.2 wt%, based on the total weight of the esterification reaction mixture.

In an alternate embodiment, instead of hydrolyzing the glycerides in the natural-oil soap stock to free fatty acids followed by esterification, it is possible to simultaneously esterify the existing free fatty acids while transesterifying the glycerides to form the above-described FAAE. Thus, in such an embodiment, the hydrolysis step could be eliminated. To accomplish simultaneous esterification and transesterification, a suitable basic catalyst should be chosen, such as sodium ethoxide or sodium butoxide. Methods known to those of ordinary skill in the art can be used to accomplish simultaneous esterification and transesterification.

Regardless of which method is employed, in an embodiment the resulting fatty acid alkyl esters can have the structure: $R^1$-C(=O)O-$R^2$, where $R^1$ represents one or more of saturated, mono-unsaturated, and polyunsaturated $C_{13}$ to $C_{23}$ straight-chain hydrocarbyl groups, and $R^2$ is a linear or branched $C_1$ to $C_8$ alkyl group.

Following esterification, the FAAE can be epoxidized. Epoxidation of FAAE can be accomplished via conventional means, such as by contact with an acid and an aqueous peroxide solution to thereby produce an epoxidized reaction mixture comprising eFAAE, residual acid, residual peroxide, and water. Suitable peroxides for use in epoxidizing the FAAE include aqueous solutions of hydrogen peroxide, peroxycarboxylic acids, alkyl hydroperoxides, and tertiary hydroperoxides. In an embodiment, the peroxide employed is an aqueous solution of hydrogen peroxide.

Suitable acids for use in epoxidizing the FAAE include carboxylic acids, such as formic acid and acetic acid; and peroxycarboxylic acids, such as performic acid and peracetic acid. In an embodiment, a peroxycarboxylic acid is employed, acting as both the acid and the peroxide. Catalysts such as mineral acids (e.g., sulfuric acid) and heterogeneous acid resins (e.g., Amberlite™ IR 120H, available from Rohm & Haas) may optionally be employed in the presence of the acid. In an embodiment, the acid employed for epoxidation is formic acid.

Epoxidation conditions employed can include a reaction temperature in the range of from 20 to 80 °C, from 30 to 70 °C, or from 40 to 60 °C, a reaction time of greater than 6 hours or in the range of from 7 to 20 hours, from 8 to 15 hours, or from 9 to 12 hours, and ambient pressure conditions. In various embodiments, the aqueous peroxide solution employed can have a concentration of less than 50 volume percent ("vol%"), less than 40 vol%, in the range of from 20 to 40 vol%, in the range of from 25 to 35 vol%, or of 30 vol%. In one or more embodiments, the molar ratio of peroxide-to-carbon/carbon double bounds in the FAAE can be from 1.5 to 2, from 1.7 to 2, or 2. In an embodiment, the peroxide solution feed rate can range from 0.2 to 2 grams of peroxide solution per gram of fatty acid alkyl esters per hour. In another embodiment, the peroxide solution feed rate can range from 0.3 to 4 moles of peroxide solution per molar equivalent of carbon-carbon double bonds in the fatty acid alkyl esters per hour. Regardless of which measurement is employed for determining the peroxide solution feed rate, in an embodiment, the peroxide solution feed rate can be controlled so that the epoxidation reaction temperature does not exceed the desired maximum temperature described above. In an embodiment, the peroxide feed rate can be controlled so as to prevent the epoxidation reaction temperature from exceeding 80 °C, 70 °C, or 60 °C. In various embodiments, the molar ratio of acid-to-carbon/carbon double bounds in the FAAE can be from 0.2 to 0.6, or from 0.3 to 0.5.

Following epoxidation, the residual acid, peroxide, and water is removed from the epoxidized reaction mixture via layer separation and neutralization. Layer separation involves separation of an aqueous layer, which contains water, acids, peroxide, and possible traces of oil and esters, from an organic layer containing the eFAAE. To accomplish layer separation, the reaction mixture is allowed to settle and separate into two layers by density difference, and the bottom aqueous layer is disposed of while the top organic layer is processed further to obtain the desired product.

Following layer separation, the residual acid can be neutralized, such as by contact with a sodium/bicarbonate solution. Thereafter, the organic layer can be washed one or more times with water. In an embodiment, the organic layer is washed repeatedly until it is neutral (having a pH of about 7). Thereafter, the washed mixture can be subjected to layer separation again, followed by vacuum distillation of the top organic layer to remove residual water.

The resulting eFAAE can have an oxirane oxygen content of at least 4, at least 4.5, at least 5, or at least 5.5 wt%, based on the entire weight of the eFAAE. Additionally, the resulting eFAAE can have an oxirane oxygen content ranging from 4 to 7 wt%, from 4.5 to 6.5 wt%, or from 5 to 6 wt%. The resulting eFAAE can have an iodine value of less than 5, less than 4.5, or less than 4 g $I_2$ / 100 g eFAAE. Furthermore, the eFAAE can have an iodine value ranging from 0 to 5, from 0.5 to 4.5, or from 1 to 4 g $I_2$ / 100 g eFAAE. The resulting eFAAE can have an acid number ranging from 0 to 1, from 0.4 to 0.6, or from 0.43 to 0.52, mg KOH / g. Furthermore, the eFAAE can have an APHA color value ranging from 10 to 50, from 20 to 40, or from 27 to 36.

The above-described eFAAE derived from a natural-oil soap stock is combined with an epoxidized natural oil to thereby form a plasticizer. The term "epoxidized natural oil," as used herein, is a natural oil wherein at least one fatty acid moiety contains at least one epoxide group. Epoxidation may be performed via conventional methods, typically by way of reaction of the natural oil with a peroxide, a percarboxylic acid, and/or other peroxy compounds, often in the presence of an acid or base catalyst, as described above.

Non-limiting examples of suitable eNOs include epoxidized algae oil, epoxidized beef tallow oil, epoxidized canola oil, epoxidized castor oil, epoxidized corn oil, epoxidized fish oil, epoxidized linseed oil, epoxidized palm oil, epoxidized rapeseed oil, epoxidized safflower oil, epoxidized soybean oil, epoxidized sunflower oil, epoxidized tall oil, epoxidized tung oil, and any combination thereof.

In an embodiment, the epoxidized natural oil is an epoxidized soybean oil ("eSO").

Examples of suitable commercially available epoxidized natural oils include PLAS-CHEK™ 775 epoxidized soybean oil, available from Ferro Corp., Mayfield Heights, OH, USA; VIKOFLEX™ 7170 epoxidized soybean oil, and VIKOFLEX™ 7190 epoxidized linseed oil, both available from Arkema Inc., Philadelphia, PA, USA.

The plasticizer can contain relative amounts of eNO (e.g., eSO)-to-eFAAE (e.g., eFAME) in a weight ratio in the range of from greater than (">") 0 : less than ("<") 100 to <100 : >0, from 10:90 to 90:10, from 20:80 to 80:20, or from 30:70 to 70:30. Weight ratios are based on total weight of the plasticizer.

*Polymeric Composition*

The present disclosure provides a polymeric composition comprising a polymeric resin and the above-described plasticizer. In various embodiments, the polymeric composition is free or substantially free of phthalates based on the entire polymeric composition weight. As used herein, "substantially free" means a value of 10 parts per million by weight or less. Additionally, in one or more embodiments, the polymeric composition can be free or substantially free of trimellitates based on the entire polymeric composition weight.

Non-limiting examples of suitable polymeric resins include polysulfides, polyurethanes, acrylics, epichlorohydrins, nitrile rubber, chlorosulfonated polyethylene, chlorinated polyethylene, polychloroprene, styrene butadiene rubber, natural rubber, synthetic rubber, ethylene-propylene-diene monomer rubber, propylene-based polymers, ethylene-based polymers, and vinyl chloride resins. The term "propylene-based polymer" denotes a polymer comprising a majority weight percent polymerized propylene monomer (based on the total amount of polymerizable monomers) and optionally at least one polymerized comonomer. The term "ethylene-based polymer" denotes a polymer comprising a majority weight percent polymerized ethylene monomer (based on the total weight of polymerizable monomers) and optionally at least one polymerized comonomer.

The term "vinyl chloride resin" denotes a vinyl chloride polymer, such as polyvinyl chloride ("PVC"), or a vinyl chloride copolymer, such as vinyl chloride/vinyl acetate copolymer, vinyl chloride/vinylidene chloride copolymer, vinyl chloride/ethylene copolymer, or a copolymer prepared by grafting vinyl chloride onto ethylene/vinyl acetate copolymer. The vinyl chloride resin can also include a polymer blend of the above-mentioned vinyl chloride polymer or vinyl chloride copolymer with other miscible or compatible polymers including, but not limited to, chlorinated polyethylene, thermoplastic polyurethane, olefin polymers such as a methacryl polymer, or acrylonitrile-butadiene-styrene polymer.

In an embodiment, the vinyl chloride resin is PVC.

In an embodiment, the polymeric composition comprises the polymeric resin in an amount ranging from 20 to 90 wt%, from 30 to 85 wt%, or from 40 to 80 wt%, based on the entire polymeric composition weight. In various embodiments, the polymeric composition comprises the above-described plasticizer in an amount ranging from 10 to 80 wt%, from 15 to 70 wt%, or from 20 to 60 wt%, based on the entire polymeric composition weight.

In various embodiments, the polymeric composition has a Shore A hardness of less than 100, less than 95, less than 90, or less than 85, as determined by ASTM D2240. In such embodiments, the polymeric composition can have a minimum Shore A hardness of 80. Shore hardness is determined on polymeric compositions having a plasticizer loading of 57 parts per hundred resin ("phr") based on 100 parts by weight of the polymeric resin.

In various embodiments, the polymeric composition has a tensile elongation retention ("TER") of at least 30, at least 40, at least 50, at least 60, or at least 70 % after heat aging at 100 °C for 10 days, as determined by ASTM D638. In such embodiments, the polymeric composition can have a TER up to 100 % after heat aging at 100 °C for 10 days, as determined by ASTM D638. Heat-aging of polymeric compositions is performed according to the procedure described below in the following Test Methods section. TER can be determined on polymeric compositions having a plasticizer loading of 57 phr.

In various embodiments, the polymeric composition has a tensile strength retention ("TSR") of at least 95, at least 100, or at least 105 % after heat aging at 100 °C for 10 days, as determined by ASTM D638. In such embodiments, the polymeric composition can have a TSR up to 113 % after heat aging at 100 °C for 10 days, as determined by ASTM D638. TSR can be determined on polymeric compositions having a plasticizer loading of 57 phr.

In various embodiments, the polymeric composition has a weight retention of at least 75, at least 80, at least 85, or at least 90 % after heat aging at 100 °C for 10 days. Weight retention can be determined on polymeric compositions having a plasticizer loading of 57 phr.

*Additives*

The polymeric composition may include one or more of the following optional additives: a filler, a flame retardant, a heat stabilizer, an anti-drip agent, a colorant, a lubricant, a low molecular weight polyethylene, a hindered amine light stabilizer, a UV light absorber, a curing agent, a booster, a retardant, a processing aid, a coupling agent, an antistatic agent, a nucleating agent, a slip agent, a viscosity control agent, a tackifier, an anti-blocking agent, a surfactant, an extender oil, an acid scavenger, a metal deactivator, and any combination thereof.

In an embodiment, the polymeric composition comprises a heat stabilizer. Examples of suitable heat stabilizers include lead-free metal soaps, lead stabilizers, organic heat stabilizers, epoxides, salts of monocarboxylic acids, phenolic antioxidants, organic phosphites, and beta-diketones. In an embodiment, the heat stabilizer employed is a lead-free mixed metal soap. The term "metal soap" denotes a salt of an acid with a metal. Metal soaps suitable for use include zinc salts of fatty acids (e.g., zinc stearate), calcium salts of fatty acids, barium salts of fatty acids, magnesium salts of fatty acids, tin salts of fatty acids, and mixtures of two or more thereof. Heat stabilizers can be present in the polymeric composition in an amount ranging from 0.2 to 10 wt%, from 0.4 to 7 wt%, or from 0.6 to 5 wt%, based on the entire polymeric composition weight.

In an embodiment, the polymeric composition includes PVC, the present plasticizer, a filler (e.g., calcium carbonate, clays, silica, and any combination thereof), one or more metal soap stabilizers, a phenolic or related antioxidant, and a processing aid.

*Coated Conductor*

The present disclosure provides a coated conductor. The coated conductor includes a conductor and a coating on the conductor, the coating being at least partially being formed from the polymeric composition described above.

A "conductor," as used herein, is one or more wire(s) or fiber(s) for conducting heat, light, and/or electricity. The conductor may be a single-wire/fiber or a multi-wire/fiber and may be in strand form or in tubular form. "Wire" means a single strand of conductive metal or a single strand of optical fiber. Non-limiting examples of suitable conductors include metals such as silver, gold, copper, carbon, and aluminum. The conductor may also be optical fiber made from either glass or plastic.

The coated conductor may be flexible, semi-rigid, or rigid. The coating (also referred to as a "jacket," "sheath," or "insulation") can be located either directly on the conductor or on another layer that surrounds the conductor.

In an embodiment, the coated conductor is a cable. "Cable" and "power cable" mean at least one wire or optical fiber within a sheath. Typically, a cable is two or more wires or optical fibers bound together, typically in a common insulation covering and/or protective jacket. The individual wires or fibers inside the sheath may be bare, covered or insulated. Combination cables may contain both electrical wires and optical fibers. The cable can be designed for low, medium, and/or high voltage applications. Typical cable designs are illustrated in USP 5,246,783, 6,496,629 and 6,714,707.

*Articles of Manufacture*

Articles of manufacture can be prepared that comprise the above-described polymeric compositions. Such articles of manufacture can include those designed for use in the medical or food industries. Exemplary articles of manufacture include blood bags, intravenous bags, saline solution bags, syringes, intravenous tubing, nasogastric tubing, catheter tubing, drainage tubing, examination gloves, oxygen masks, orthodontic retainers, artificial skin, and food packaging (e.g., packaging for various beverages, meats, and frozen vegetables).

TEST METHODS

*Compositional Analysis via LC/UV/MS*

Samples are 20 μL of sample dissolved in 10 mL of acetonitrile.

LC/MS Method:

UHPLC Parameters:

- UHPLC System: Waters Acquity System with Binary Solvent Manager Model 18615001, Sample Manager Model 186015006, Column Compartment Model 18015010, and TUV Model 186015028
- Column: Waters Acquity UPLC® BEH C8, 1.7 mm, 2.1 mm x 50mm
- Injection Volume: 1.0 μL
- Flow (mL/min): 0.40 mL/min.
- Temperature (°C): 60°C

Mobile Phase Program:

- A%: 10 mM Ammonium acetate in water
- B%: 10 mM Ammonium acetate in 95 acetonitrile/5 water

| Time | A% | B% |
|------|-----|-----|
| 0.00 | 75 | 25 |
| 20.00 | 0 | 100 |
| 35.00 | 0 | 100 |
| 36.00 | 75 | 25 |
| 40.00 | 75 | 25 |

Positive Ion Mass Spectrometer Parameters

Instrument:    Bruker microOTOF-Q II

Source:

| | |
|---|---|
| Source Type | ESI |
| Ion Polarity | Positive |
| Set Nebulizer | N2 @ 2.0 Bar |
| Set Dry Gas | N2 @ 8.0 L/min |
| Set Dry Heater | 200 °C |

(continued)

| Scan Begin | 50 m/z |
|---|---|
| Scan End | 1500 m/z |
| Set Capillary | 4250 V |
| Set End Plate Offset | -500 V |
| Focus | Not active |
| Set Divert Valve | Source |

| Ion Optics: | |
|---|---|
| Set Hexapole Storage | 41.0 V |
| Set Hexapole Extraction | 31.5 V |
| Set Lens 2 | -4.0 V |
| Set Lens 3 | 36.0 V |
| Set Lens 4 | 29.7 V |
| Set Lens 5 | -24.9 V |
| Set Lens 6 | 21.3 V |
| Set Collision Storage | 35.0 V |
| Set Collision Extraction | 19.0 V |
| Set Lens 7 | 2.8 V |
| Set Lens 8 | -13.3 V |
| Set Lens 9 | 0.0 V |
| Set Lens 10 | -26.0 V |
| Set Funnel 1 RF | 200.0 Vpp |
| Set Funnel 2 RF | 250.0 Vpp |
| Set Hexapole RF | 200.0 Vpp |
| ISCID Energy | 0.0 eV |

TOF:

| Set Corrector Fill | 56 V |
|---|---|
| Set Pulsar Pull | 814 V |
| Set Pulsar Push | 814 V |
| Set Reflector | 1700 V |
| Set Flight Tube | 8600 V |
| Set Corrector Extract | 560 V |
| Set Detector TOF | 2120 V |

Quadrupole:

| Set Ion Energy (MS only) | 3.0 eV |
|---|---|
| Set Isolation Mass (MS only) | 50.00 m/z |
| Collision Energy | 8.0 eV |
| Set Collision Cell RF | 450.0 Vpp |
| Set Transfer Time | 121.0 $\mu$s |
| Set PrePulse Storage Time | 1.0 $\mu$s |

Processing:

| Summation | 5000 x |
|---|---|
| Guessed Noise | 200 |
| Peak Width | 5 pts |

(continued)

| Average Noise | 10 |
|---|---|
| Guessed Average | 100 |

Mass Calibration (pre-run calibration):

| TOF1 Calibration Mode | Enhanced Quadratic |
|---|---|

CID Collision Cell Gas:

Argon @ 30

Negative Ion Mass Spectrometer Parameters

| Instrument | Bruker microOTOF-Q II (S/N 228888-10170) |
|---|---|

Source:

| Source Type | ESI |
|---|---|
| Ion Polarity | Negative |
| Set Nebulizer | N2 @ 2.2 Bar |
| Set Dry Gas | N2 @ 8.0 L/min |
| Set Dry Heater | 200 °C |
| Scan Begin | 50 m/z |
| Scan End | 1200 m/z |
| Set Capillary | 4500 V |
| Set End Plate Offset | -500 V |
| Focus | Not active |
| Set Divert Valve | Source |

Ion Optics:

| Set Hexapole Storage | -44.0 V |
|---|---|
| Set Hexapole Extraction | -35.0 V |
| Set Lens 2 | 1.0 V |
| Set Lens 3 | -39.0 V |
| Set Lens 4 | -27.0 V |
| Set Lens 5 | 24.0 V |
| Set Lens 6 | -21.0 V |
| Set Collision Storage | -50.0 V |
| Set Collision Extraction | -18.8 V |
| Set Lens 7 | -7.0 V |
| Set Lens 8 | 18.0 V |
| Set Lens 9 | 0.0 V |
| Set Lens 10 | 25.0 V |
| Set Funnel 1 RF | 200.0 Vpp |
| Set Funnel 2 RF | 200.0 Vpp |
| Set Hexapole RF | 120.0 Vpp |
| ISCID Energy | -12.0 eV |

TOF:

| | |
|---|---|
| Set Corrector Fill | 47 V |
| Set Pulsar Pull | 820 V |
| Set Pulsar Push | 820 V |
| Set Reflector | 1700 V |
| Set Flight Tube | 8600 V |
| Set Corrector Extract | 587 V |
| Set Detector TOF | 2120 V |

Quadrupole:

| | |
|---|---|
| Set Ion Energy (MS only) | -8.0 eV |
| Set Isolation Mass (MS only) | 100.00 m/z |
| Collision Energy | -6.0 eV |
| Set Collision Cell RF | 325.0 Vpp |
| Set Transfer Time | 140.0 $\mu$s |
| Set PrePulse Storage Time | 1.0 $\mu$s |

Processing:

| | |
|---|---|
| Summation | 5000 x |
| Guessed Noise | 200 |
| Peak Width | 5 pts |
| Average Noise | 1 |
| Guessed Average | 100 |

Mass Calibration (pre-run calibration):

| | |
|---|---|
| TOF1 Calibration Mode | Enhanced Quadratic |

CID Collision Cell Gas:

Argon @ 25

*Shore Hardness*

Determine Shore A hardness according to ASTM D2240 using molded specimens of 250 mil (6.35 mm) thickness.

*Tensile Properties*

Determine tensile strength and tensile elongation at break for both unaged and heat-aged samples according to ASTM D638 at a displacement rate of 20 inch/minute on Type IV dogbone-shaped specimens cut from 30-mil (0.762 mm) thick molded plaques.

*Loop Spew (Plasticizer Compatibility)*

Measure loop spew in accordance with ASTM D3291.

*Weight Retention*

Measure weight retained, expressed as a percentage, after ten days at 100 °C on specimens of 1-inch (2.54 cm) diameter that are cut from 30-mil (0.762 mm) thick molded plaques.

*Heat Aging*

Heat aging of the "tensile" and "weight retained" specimens (having geometries described above) is conducted using Type II ASTM D5423 - 93 Testing Mechanical Convection Oven.

*Iodine Value*

Determine iodine value according to AOCS Tg 1-64. A Titrando 888 Metrohm titrator with 801 stir unit and Tiamo 2.1 software is used for iodine number analysis. The sample size used is 10 g, the electrode is a Pt electrode, and the dispensing unit is 0.1N $Na_2S_2O_3$. The reagents used are a dissolving solution (50:50 mixture of glacial acetic acid: cyclohexane), a Wijs solution, a potassium iodide solution, and deionized ("DI") water. Perform the analysis by weighting 10 g of the sample into a 250-mL beaker. Then add 20 mL of dissolving solution and 25 mL of Wijs solution to the beaker. Swirl the mixture, cover with aluminum foil, and store in the dark for 1 hour at room temperature (25 °C $\pm$ 5 °C). After 1 hour, add 20 mL of potassium iodide solution and 100 mL of DI water into the beaker. Titrate the mixture immediately. The iodine number is calculated automatically by software.

*Oxirane Oxygen Content*

Determine oxirane oxygen content according to ASTM D1652. A Titrando 888 Metrohm titrator with 801 stir unit and Tiamo 2.1 software is used for oxirane oxygen number analysis. The sample sized used is 0.15g, the electrode used is a pH electrode, and the dispensing unit is 0.1N Perchloric acid. The reagents used are dichloromethane and 20 % tetraethyl ammonium bromide in acetic acid. Perform the analysis by weighing 0.15 g of sample into a 100-mL beaker. Then add 30 mL of dichloromethane and 15 mL of 20 % tetraethyl ammonium bromide in acetic acid. Titrate the mixture immediately. The oxirane number is calculated automatically by software.

*Oxirane Oxygen Selectivity*

From the oxirane oxygen and iodine number data for various eFAME samples in conjunction with the starting iodine number for the refined starting soybean oil and soybean-oil soap stock, one can calculate the oxirane selectivity as described by Campanella et. al. (High yield epoxidation of fatty acid methyl ester with performic acid generated in-situ, Chemical Engineering Journal, 144 (2008) 466-475).

Percent conversion of double bonds calculated as $X = [(IV_0 - IV) / IV_0] \times 100$, where $IV_0$ is the Iodine value of the starting soybean oil or soybean-oil soap stock, and IV is the iodine value of the eFAME prepared therefrom;

Percent oxirane oxygen yield = $[(\%Ox) / (\%Oxt)] \times 100$, where %Oxt represents the theoretical percent oxirane for $IV_0$, and %Ox represents the actual percent oxirane;

$$\%Oxt = \{(IV_0 / MWI_2) / [100 + (IV_0 / MWI_2) MWO]\} MWO \times 100,$$

where $MWI_2$ is the molecular weight of iodine, and MWO is the molecular weight of oxygen;

$$\text{Oxirane oxygen selectivity} = [(\%Ox) / (\%Oxt)] \times [IV_0 / (IV_0 - IV)].$$

*Acid Number*

Determine acid number according to ASTM D974.

*APHA Color Measurement*

Measure liquid color according to ASTM standards E1209 and E313 using a BYK Gardner LCS III™ instrument and measure in APHA units. Set up the bench-top instrument and perform calibration check to insure the instrument is working within specifications. Measure sample color using the protocol listed below:

- Set LCS III to measure Hazen/Alpha indices;
- Measure each sample via syringe (10 mL) into individual calibrated cuvettes;
- Place each loaded cuvette into the LCS III and press the test button; a Hazen/Alpha number is generated. Record this number, remove the sample and place back into the LCS III to measure a second time (record data). Repeat for a third time (record data).

- Remove the loaded cuvette and set aside; reset the LCS III to measure Yellowness Index, measure the same cuvette for Yellowness Index (record three measurements).

*Extraction Resistance Test*

Determine extraction resistance according to ASTM D543-06 using the following conditions:

a. Media 1 - Hexane, 7 days @ 25 °C; and
b. Media 2 - Olive oil, 7 days @ 25 °C.

EXAMPLES

**Example 1- Characterization of Natural-Oil Soap Stocks**

Analyze five natural-oil soap stocks and one conventional soybean oil for compositional make-up via LC/UV/MS according to the Test Methods provided above. Sample "AFC TRIO"™ is a vegetable-oil soap stock blend of canola, soy, and corn oil soap stocks available from Agri-Fine Corporation, Chicago, IL, USA. Sample "VEG 4000" is a vegetable-oil soap stock, available from Feed Energy Company, Des Moines, IA, USA. Sample "Hebei Jingu" is a soybean-oil soap stock available from Hebei Jingu, China. Sample CHS Acidulated is a soybean-oil soap stock available from CHS Inc., Inver Grove Heights, MN, USA. Sample "Corn Oil" is a corn-oil soap stock obtained from Feed Energy Company, Des Moines, IA, USA. Sample "Soy Oil" is a comparative sample of conventional soybean oil obtained from ADM, Decatur, IL, USA. The characterization of these samples is provided in Table 1, below. Component concentrations in Table 1 are reported as relative UV 210 nm peak areas.

**Table 1- Natural-Oil Scan Stock Characterization**

| Sample | Triglycerides | Diglycerides | Monoglycerides | Free Fatty Acids | Other |
|---|---|---|---|---|---|
| **Retention Time (min.)** | **21.5-25.7** | **17.7-18.9** | **-** | **8.8-11.3** | **-** |
| AFC Trio | 3% | 1.5% | - | 91% | 5% |
| VEG 4000 | 17% | - | - | 80% | 4% |
| Hebei Jingu | 14% | 18% | - | 69% | - |
| CHS Acidulated | 27% | 11% | - | 63% | - |
| Corn Oil | 77% | 10% | - | 12% | - |
| Soy Oil | 100% | - | - | - | - |

As can be seen from the results reported in Table 1, the glyceride and free fatty acid components can vary significantly among various natural-oil soap stocks. This is likely due to the variations in the refining process as well as variations in the starting crude natural oil.

**Example 2 - APHA Color Characterization**

Analyze the Soy Oil and Hebei Jingu samples described in Example 1 for APHA color according to the procedure described in the Test Methods section, above. The soy oil sample has an APHA color value of 103. The Hebei Jingu sample, however, has an APHA color value that cannot be measured, as it is much greater than the maximum value of 1,000 on the APHA color scale.

**Example 3 - Characterization of Commercial eFAME from Natural-Oil Soap Stock**

Analyze three Samples (S1-S3) of eFAME from soybean-oil soap stock for oxirane oxygen content, iodine value, acid number, and APHA color. Compare these results to two Comparative Samples (CS 1-CS 2). Samples S1-S3 are commercially available eFAME from soybean-oil soap stocks produced by Hebei Jingu, China. Comparative Samples CS 1 and 2 are commercially available eFAME prepared from conventional soybean oil, available from Arkema S.A., Colombes, France. The results of these analyses are provided in Table 2, below.

**Table 2 - Properties of S1-S3 and CS1-CS2**

| Sample No. | Oxirane Oxygen (wt%) | Iodine Value (g I$_2$/100 g) | Acid Number (mg KOH / g) | Color (APHA) |
|---|---|---|---|---|
| S1 | 5.48 | 3.6 | 0.46 | 36 |
| S2 | 5.48 | 3.7 | 0.43 | 34 |
| S3 | 5.53 | 3.6 | 0.52 | 27 |
| CS 1 | 6.60 | 2.1 | 0.57 | 24 |
| CS 2 | 6.60 | 2.6 | 0.65 | 30 |

The results in Table 1 show that the oxirane oxygen content of the eFAME samples made from soap stock are about 1.1 wt% less than that made from conventional soybean oil. The iodine number is also somewhat higher for the soap stock-made Samples (S1-S3). The acid numbers for all the eFAME samples are found to be comparable.

Additionally, the inventors have unexpectedly discovered that the starting soybean-oil soap stock having extraordinarily high APHA color values provides an eFAME plasticizer with APHA color values comparable to those prepared from conventional soybean oil, which has a considerably lower APHA color value, as noted in Example 2, above.

**Example 4 - Oxirane Oxygen Selectivity**

Determine the oxirane oxygen selectivity for Samples S1-S3 and CS 1-CS 2, as prepared in Example 3, according to the calculation and procedure provided in the Test Methods section, above. Results are provided in Table 3, below.

**Table 3 - Oxirane Oxygen Selectivity of S1-S3 and CS1-CS2**

| Samples | Feedstock Iodine Number (IV$_0$) | Theoretical max oxirane oxygen, wt% (% Oxt) | Actual oxirane oxygen, wt% (%Ox) | Final Iodine Value of eFAME (IV) | Percent conversion of double bonds (X) | Oxirane Oxygen Selectivity, % |
|---|---|---|---|---|---|---|
| S1 | 128 | 7.46 | 5.48 | 3.6 | 97.19 | 75.6 |
| S2 | 128 | 7.46 | 5.48 | 3.7 | 97.11 | 75.6 |
| S3 | 128 | 7.46 | 5.53 | 3.6 | 97.19 | 76.3 |
| CS1 | 130 | 7.57 | 6.6 | 2.1 | 98.38 | 88.6 |
| CS2 | 130 | 7.57 | 6.6 | 2.6 | 98.00 | 89.0 |

Table 3 shows that the oxirane oxygen selectivity for the soap stock-originated eFAME samples to be about 12-14% lower than that made from soybean oil. Therefore, it would be reasonable to assume a higher level of degraded products (e.g., hydroxyls and others) is present in soap stock-originated eFAME. This conclusion would lead one skilled in the art to assume a fundamental incompatibility with polymer resin, particularly PVC. Such incompatibility would be expected to result in exudation; however, as shown in Table 5 of Example 5, below, no spew is seen for any of the PVC samples made with soap stock-originated eFAME samples.

**Example 5 - Evaluation of eFAME from Natural-Oil Soap Stock Blended with eSO as PVC Plasticizer**

Prepare three Samples (S4-S6) and one Comparative Sample (CS 3) by initially blending eFAME with an epoxidized soybean oil ("eSO") in a 35:65 weight ratio of eFAME-to-eSO to prepare a plasticizer component. The eFAME employed in Samples S4-S6 is the same as described in Example 3 for Samples S1-S3. The eFAME employed in Comparative Sample CS 3 is the same as described in Example 3 for Samples CS 1-CS 2. The eSO employed in this example is commercially available under the trade name PLAS-CHEK™ 775 from Ferro Corporation, Mayfield Heights, OH, USA.

Combine the plasticizer component with PVC resin, calcium carbonate, zinc stearate, and an antioxidant (IRGANOX™ 1076) according to the amounts shown in Table 4, below

**Table 4 - Composition of S4-S6 and CS3**

| Ingredient | Parts per hundred resin ("phr") |
|---|---|
| PVC (g) | 100 |
| CaCO$_3$ (g) | 68 |
| Plasticizer (g) | 57 |
| Zn Stearate (g) | 3 |
| Antioxidant (g) | 0.1 |
| **Total weight (g)** | **228**.1 |

The PVC resin employed in this example is OxyVinyls 240F, a film-grade PVC resin, available from Occidental Petroleum Company, Los Angeles, CA, USA. The calcium carbonate employed in this example is an uncoated calcium carbonate available under the trade name HUBERCARB™, from Huber Engineered Materials. The zinc stearate employed in this example is available under the trade designation RSN 131 HS from Baerlocher GmbH, Unterschleissheim, Germany. IRGANOX™ 1076 is octadecyl-3-(3,5-di-tert-butyl-4-hydroxyphenyl)-propionate, available from BASF.

Samples S4-S6 and CS 3 are prepared by first making a solids mixture by mixing everything except the plasticizer and the filler in a container using a spatula. Set a Brabender mixing bowl with a volume of 250 cm$^3$ and new sigma blades at 90 °C and 40 rpm. After a 2-minute warm-up period, add the solids mixture to the Brabender mixing bowl and mix for 30 seconds. Add the plasticizer, and mix for 6 minutes. Record the time required for complete absorption (via visual inspection) for each plasticizer. Add the filler, and mix for 60 seconds. Stop and remove the dry blend. The dry blend is then added to a 250-cm$^3$ Brabender bowl with cam rotors at 40 rpm at 180 °C and mixed for 120 seconds to melt blend.

Mold each compound in a hot press (180 °C, 5 minutes) to make 30-mil plaques. Dogbone-shaped samples are prepared from each of these plaques and are heat-aged in an oven at 100 °C for 10 days. Measure tensile strength and elongation for both aged and non-aged plaques using an Instron device with a strain rate of 20 inches/minute. For all tensile data, an average reading from five dog bones is listed in Table 5. In addition to evaluating tensile data for non-aged and heat-aged samples, 1-inch circular discs are cut from each plaque, which are also subjected to heat-aging at 100 °C for 10 days. Measure the weight change after heat aging. Visual observation is also made to detect any plasticizer exudation (spew) from these discs. Table 5 shows all the results for the analyses of Samples S4-S6 and CS 3.

**Table 5 - Properties of S4-S6 and CS 3**

| Sample | Tensile strength-unaged (psi) | Elongation @break-unaged (%) | Retained tensile strength after aging (%) | Retained elongation @break after aging (%) | Shore A hardness | Weight change after aging (%) | Spew rating[a] of aged sample |
|---|---|---|---|---|---|---|---|
| S4 | 2338 | 304 | 105 | 79 | N/A | -5.9 | None |
| S5 | 2104 | 295 | 113 | 92 | 84.2 | -6.3 | None |
| S6 | 2278 | 320 | 107 | 79 | 84.2 | -6.2 | None |
| CS 3 | 2372 | 325 | 101 | 73 | 84 | -6.6 | None |
| Spew rating is expressed as none (for no exudation), slight, moderate, or heavy | | | | | | | |

The results provided in Table 5 show that for all properties measured, the plasticizers prepared with eFAME derived from soybean-oil soap stock perform comparably with the plasticizer containing eFAME derived from conventional soybean oil. The initial elongation at break and shore A hardness values signify the plasticizing effect of the plasticizers and the results are remarkably close for all the plasticizer batches. The elongation values for the aged samples, on the other hand, signify retention of flexibility after heat aging. The results again show that the samples of the inventive examples are equal or even better (for S5) with respect to this property than the sample described in the comparative example.

**Example 6 -Extraction Resistance in Hexane and Olive Oil**

Prepare a Sample (S7) and a Comparative Sample (CS 4) for determination of extraction resistance in hexane and olive oil. The Sample S7 is prepared with a plasticizer having a 50:50 eFAME/eSO blend by weight composition. The eFAME and eSO are both commercially available from Arkema, Inc. The Comparative Sample CS 4 is prepared with a diisodecyl phthalate, commercially available from Sigma-Aldrich, St. Louis, MO, USA.

Combine the plasticizer component with PVC resin and zinc stearate according to the amounts shown in Table 6, below

**Table 6 - Composition of S7 and CS 4**

| Ingredient | S7 | | CS 4 | |
|---|---|---|---|---|
| | Phr | Wt% | Phr | Wt% |
| PVC | 100 | 67.81 | 100 | 71.79 |
| eFAME/eSO | 47.25 | 32.04 | - | - |
| Diisodecyl phthalate | - | - | 39.08 | 28.06 |
| Zinc Stearate | 0.215 | 0.146 | 0.215 | 0.154 |

The PVC resin and zinc stearate employed in this example are the same as described above in Example 5.

Samples S7 and CS 4 are prepared by first weighing the ingredients in a mixing bowl. Add the resin first, followed by plasticizer, then stabilizer. Make sure the ingredients (besides the resin) are added in the center of the bowl so they do not stick to the sides. The total compound batch size is typically 300-400 grams. Mix the ingredients in the bowl together with a spatula, trying to make sure that no one ingredient sticks to the side of the mixing bowl. Preheat a two-roll mill to 330-340 °F. Set the mill nip to be around 0.060". Tighten or loosen the mill as needed to help control the material on the mill and the thickness of the mill sheet. Place the dry-blend from the mixing bowl onto the mill rolls while the mill is off. Turn the two-roll mill on. Work the material on the mill so that it starts to fuse, and then add back onto the mill any material that has fallen through the mill rolls. Once all of the material from the mixing bowl has banded on the mill, set the timer and continuously work the material on the mill for a total of 5 minutes. Thereafter, strip the material off the mill in a single mill sheet. Allow the mill sheet to cool, then cut the mill sheet into squares and stack them in the mold for the compression molded plaques. Make sure when stacking the squares that the sheets are all in the same direction of flow. Prepare 6" x 6" x 0.125" plaques by pressing the plaques at 180 °C at the following conditions: (a). 3 minutes low pressure (500 psig); (b). 3 minutes high pressure (2000 psig); and (c). cool to 30-40 °C using cold water flow.

Measure extraction resistance of S7 and CS 4 in hexane and olive oil according to the procedure provided in the Test Methods section, above. Results are provided in Table 7, below.

**Table 7 - Extraction Resistance for S7 and CS 4**

| Sample | Weight (g) | Medium | Time (days) | Percent weight change* |
|---|---|---|---|---|
| CS 4 | 15.8787 | Hexane | 0 | - |
| | 14.4920 | | 7 | -8.73 |
| S7 | 16.0208 | | 0 | - |
| | 16.0774 | | 7 | +0.35 |

(continued)

| Sample | Weight (g) | Medium | Time (days) | Percent weight change* |
|--------|-----------|--------|-------------|------------------------|
| CS 4 | 15.9145 | Olive Oil | 0 | - |
| | 15.8423 | | 7 | -0.45 |
| S7 | 15.9574 | | 0 | - |
| | 15.9242 | | 7 | -0.21 |
| * minus = weight loss; plus = weight gain | | | | |

Sample S7 shows an improvement of a factor of 25 in plasticizer extraction resistance in hexane and an improvement of a factor of 2 over diisodecyl phthalate in extraction resistance in olive oil.

## Claims

1. A plasticizer composition, comprising:

   epoxidized fatty acid alkyl ester ("eFAAE"); and
   an epoxidized natural oil,

   wherein at least a portion of said eFAAE is derived from a natural-oil soap stock.

2. The plasticizer composition of claim 1, wherein at least a portion of said eFAAE is epoxidized fatty acid methyl ester.

3. The plasticizer composition of either claim 1 or claim 2, wherein at least a portion of said natural-oil soap stock is soap stock from soybean oil.

4. The plasticizer composition of any one of the foregoing claims, wherein said eFAAE has an oxirane oxygen number of at least 4 weight percent, wherein said eFAAE has an iodine number of less than 5 g $I_2$ / 100 g of eFAAE.

5. The plasticizer composition of any one of the foregoing claims, wherein said epoxidized natural oil is epoxidized soybean oil.

6. The plasticizer composition of any one of the foregoing claims, wherein said natural-oil soap stock comprises water and phospholipids.

7. A polymeric composition, comprising:

   a polymeric resin; and
   the plasticizer composition according to any one of the foregoing claims.

8. The polymeric composition of claim 7, wherein said polymeric resin is polyvinyl chloride.

9. An article of manufacture comprising the polymeric composition of either claim 7 or claim 8.

10. A cable, comprising:

    a conductive core; and
    a polymeric layer at least partially surrounding said conductive core,

    wherein said polymeric layer comprises the polymeric composition of either claim 7 or claim 8.

**Patentansprüche**

1. Eine Weichmacherzusammensetzung, die Folgendes beinhaltet:

   epoxidierte Fettsäure-Alkylester ("eFAAE"); und
   ein epoxidiertes natürliches Öl,

   wobei mindestens ein Teil des eFAAE aus einem Seifenvorrat natürlichen Öls abgeleitet ist.

2. Weichmacherzusammensetzung gemäß Anspruch 1, wobei mindestens ein Teil des eFAAE epoxidierter Fettsäure-Methylester ist.

3. Weichmacherzusammensetzung gemäß Anspruch 1 oder Anspruch 2, wobei mindestens ein Teil des Seifenvorrats natürlichen Öls Sojaöl-Seifenvorrat ist.

4. Weichmacherzusammensetzung gemäß einem der vorhergehenden Ansprüche, wobei der eFAAE eine Oxiran-Sauerstoffzahl von mindestens 4 Gewichtsprozent aufweist, wobei der eFAAE eine Iodzahl von weniger als 5 g $I_2$/100 g eFAAE aufweist.

5. Weichmacherzusammensetzung gemäß einem der vorhergehenden Ansprüche, wobei das epoxidierte natürliche Öl epoxidiertes Sojaöl ist.

6. Weichmacherzusammensetzung gemäß einem der vorhergehenden Ansprüche, wobei der Seifenvorrat natürlichen Öls Wasser und Phospholipide beinhaltet.

7. Eine Polymerzusammensetzung. die Folgendes beinhaltet:

   ein Polymerharz; und
   die Weichmacherzusammensetzung gemäß einem der vorhergehenden Ansprüche.

8. Polymerzusammensetzung gemäß Anspruch 7, wobei das Polymerharz Polyvinylchlorid ist.

9. Ein Herstellungsartikel, der die Polymerzusammensetzung gemäß Anspruch 7 oder Anspruch 8 beinhaltet.

10. Ein Kabel, das Folgendes beinhaltet:

    einen leitenden Kern; und
    eine Polymerbeschichtung, die den leitenden Kern zumindest teilweise umgibt,

    wobei die Polymerbeschichtung die Polymerzusammensetzung gemäß Anspruch 7 oder Anspruch 8 beinhaltet.

**Revendications**

1. Une composition de plastifiant comprenant :

   de l'ester époxydé d'acide gras et d'alkyle (« eFAAE ») ; et
   un huile naturelle époxydée,

   dans laquelle au moins une portion dudit eFAAE est dérivée d'une pâte de neutralisation d'huile naturelle.

2. La composition de plastifiant de la revendication 1, dans laquelle au moins une portion dudit eFAAE est de l'ester époxydé d'acide gras et de méthyle.

3. La composition de plastifiant soit de la revendication 1, soit de la revendication 2, dans laquelle au moins une portion de ladite pâte de neutralisation d'huile naturelle est une pâte de neutralisation issue d'huile de soja.

4. La composition de plastifiant de l'une quelconque des revendications précédentes, dans laquelle ledit eFAAE présente un nombre oxirane oxygène d'au moins 4 pour cent en poids, dans laquelle ledit eFAAE présente un nombre d'iode inférieur à 5 g $I_2$/ 100 g d'eFAAE.

**5.** La composition de plastifiant de l'une quelconque des revendications précédentes, dans laquelle ladite huile naturelle époxydée est de l'huile de soja époxydée.

**6.** La composition de plastifiant de l'une quelconque des revendications précédentes, dans laquelle ladite pâte de neutralisation d'huile naturelle comprend de l'eau et des phospholipides.

**7.** Une composition polymérique comprenant :

une résine polymérique ; et
la composition de plastifiant selon l'une quelconque des revendications précédentes.

**8.** La composition polymérique de la revendication 7, dans laquelle ladite résine polymérique est du poly(chlorure de vinyle).

**9.** Un article de fabrication comprenant la composition polymérique soit de la revendication 7, soit de la revendication 8.

**10.** Un câble comprenant :

une âme conductrice ; et
une couche polymérique entourant au moins partiellement ladite âme conductrice,

dans lequel ladite couche polymérique comprend la composition polymérique soit de la revendication 7, soit de la revendication 8.

REFERENCES CITED IN THE DESCRIPTION

**Patent documents cited in the description**

- US 61787795 A
- US 5246783 A
- US 6496629 B
- US 6714707 B

**Non-patent literature cited in the description**

- **CAMPANELLA.** High yield epoxidation of fatty acid methyl ester with performic acid generated in-situ. *Chemical Engineering Journal,* 2008, vol. 144, 466-475